# EUROPÄISCHE PATENTANMELDUNG

(11) **EP 0 821 172 A1**
(43) Veröffentlichungstag der Anmeldung: **28.01.1998**
(21) Anmeldenummer: 97112340.1
(22) Anmeldetag: 18.07.1997
(51) Int. Cl.: F16D 9/08

(54) **Drehmoment übertragendes Bauteil mit einer Sollbruchstelle**

(30) Priorität: 24.07.1996 DE 19629820
(71) Anmelder: ZF FRIEDRICHSHAFEN Aktiengesellschaft, 88038 Friedrichshafen (DE)
(72) Erfinder: Bendel, Günther, 88069 Tettnang (DE); Schulz, Martin, 88045 Friedrichshafen (DE); Raab, Rudolf, 88069 Tettnang (DE); Müller, Walter, 88046 Friedrichshafen (DE); Sollich, Alfred, Dr., 88048 Friedrichshafen (DE)

(57) **Zusammenfassung**

Beschrieben wird ein Drehmoment übertragendes Bauteil (20) mit einer Sollbruchstelle, welches den Drehmomentenschluß löst, wenn die Belastung vorbestimmte Grenzen überschreitet, wobei das Bauteil aus Grauguß oder einer Bronzelegierung hergestellt ist, womit eine ausreichende Widerstandsfähigkeit gegenüber Schwingbelastung erzielt wird. Eine Verkleinerung des tragenden Querschnitts mit der Funktion der Sollbruchstelle und die Materialeigenschaft der Widerstandsfähigkeit gegenüber Schwingbelastung sind derart aufeinander abgestimmt, daß der Drehmomentenschluß sowohl bei quasistatischer Überlastung als auch bei Überlastung durch Schwingbelastung gelöst wird, jedoch während der geforderten Lebensdauer der Antriebseinrichtung nicht gelöst wird, wenn die Belastung innerhalb der zulässigen Grenzen ist.

## Beschreibung

Die Erfindung betrifft ein Drehmoment übertragendes Bauteil mit einer Sollbruchstelle, sowie dessen Verwendung in einer Antriebseinrichtung, welches dazu dient, den Drehmomentenschluß zu lösen, wenn die Belastung vorbestimmte Grenzen überschreitet.

In zahlreichen Antriebseinrichtungen werden Bauteile mit Sollbruchstelle eingesetzt. Sie sind bezogen auf eine bestimmte Belastung die jeweils schwächsten Glieder in einer zusammenhängenden Kette von Drehmoment übertragenden Bauteilen. Sie dienen der Sicherheit oder als Überlastschutz für andere Teile der Antriebseinrichtung, wie z. B. Gehäuse, bei denen die Überlastung gravierendere Schäden hervorrufen würde.

Wenn die Belastung im normalen Betrieb einer Antriebseinrichtung nicht wesentlich unter der Bruchlast der Sollbruchstelle bezogen auf Gewaltbruch (Gewaltfestigkeit) liegt, spielt die Widerstandsfähigkeit des Bauteils mit der Sollbruchstelle gegenüber Schwingbelastung über die Benutzungsdauer der Antriebseinrichtung eine große Rolle. Ist die Widerstandsfähigkeit des Bauteils mit der Sollbruchstelle gegenüber Schwingbelastung zu gering, führt dies zu ungewolltem Lösen des Drehmomentenschlusses und damit zu einer Betriebsstörung. Dieses Verhalten tritt insbesondere bei Bauteilen mit Sollbruchstelle auf, die aus Stahl ohne spezielle Behandlung bestehen, die eine geringe Dauerfestigkeit aufweisen. Ebenfalls kann es problematisch sein, wenn die Widerstandsfähigkeit des Bauteils mit der Sollbruchstelle gegenüber Schwingbelastung zu groß ist. Dann können über die Sollbruchstelle Brüche durch Schwingbelastung an anderen Stellen der Antriebseinrichtung nicht abgesichert werden. Dieses Problem ergibt sich besonders dann, wenn die Bauteile aus speziellen Materialien mit hoher Schwingfestigkeit im Verhältnis zur Gewaltfestigkeit, wie z.B. Keramik gebildet sind, wie in DE 4437452 beschrieben ist.

Der vorliegenden Erfindung liegt daher die Aufgabe zugrunde, ein Bauteil mit einer Sollbruchstelle zu schaffen, welches sowohl den Gewaltbruch durch quasistatische Überlastung als auch den Schwingbruch durch Schwingbelastung in unzulässiger Höhe an anderen Bauteilen der Antriebseinrichtung absichert, jedoch während der geforderten Lebensdauer der Antriebseinrichtung nicht bricht, wenn die Belastung innerhalb der zulässigen Grenzen ist. Mit der Erfindung sollen insbesondere Gehäuse von Antriebseinrichtungen wirksam vor Beschädigungen geschützt werden.

Die der Erfindung zugrunde liegende Aufgabe wird dadurch gelöst, daß das Bauteil mit der Sollbruchstelle aus Grauguß oder einer Bronzelegierung hergestellt ist, womit eine an zu schützende Bauteile angepaßte Schwing- und Gewaltfestigkeit erzielt wird. Eine Verkleinerung des tragenden Querschnitts, vorzugsweise in Form einer umlaufenden Kerbnut, erzeugt gezielt eine örtlich begrenzte Schwachstelle, welche als Sollbruchstelle dient. Durch eine geeignete Form der Verkleinerung des tragenden Querschnitts in Verbindung mit geeigneten Materialeigenschaften in Bezug auf Grundfestigkeit und Dauerfestigkeit kann sowohl die quasistatische Belastung, welche zum sofortigen Bruch als auch die Schwingbelastung, welche zum Schwingbruch führt, in engen Grenzen auf eine gewünschte Höhe eingestellt werden.

Die Erfindung weist den Vorteil auf, daß sie zuverlässig Gewalt- **und** Schwingbruch an anderen Stellen der Antriebseinrichtung verhindert, und dabei trotzdem dauerhaft hohe Momente übertragen kann, die gerade noch zulässig sind. Eine Anordnung mit einer demontierbaren Verbindung zu den benachbarten Antriebsteilen außerhalb des Gehäuses der Antriebseinrichtung bietet die Vorteile, daß keine Bruchstücke ins Innere des Gehäuses gelangen können, und das Bauteil ohne großen Montageaufwand leicht und schnell austauschbar ist. Darüber hinaus ist die Kombination mit einer Verliersicherung vorteilhaft, wodurch verhindert wird, daß angebundene Antriebsteile nach einem Bruch an der Sollbruchstelle abfallen. Es können also trotz Lösen des Drehmomentenschlusses weiterhin Längs- und Querkräfte übertragen werden. Ein weiterer Vorteil ist, daß der Bruchverlauf im Überlastfall durch die Kerbnut eindeutig begrenzt ist.

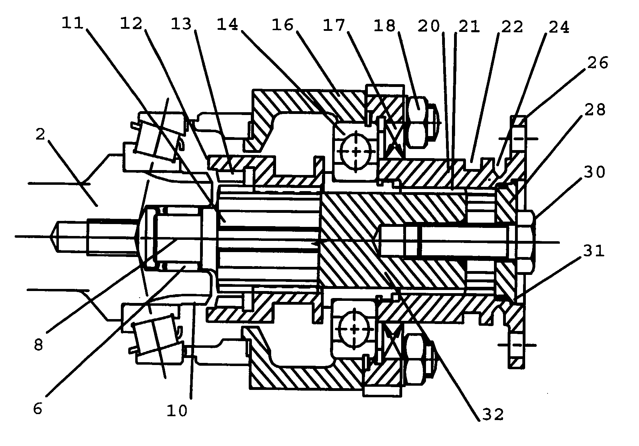

Die Erfindung wird anhand der Fig. 1 und Fig. 2 näher erläutert. Beide Figuren zeigen einen Schnitt durch einen Nebenabtrieb an einem Fahrzeuggetriebe mit einem erfindungsgemäßen Bauteil 20 mit Kerbnut 24, welche als Sollbruchstelle dient.

In Fig. 1 ist das Bauteil 20 direkt durch eine Keilverzahnung mit der antreibenden Zwischenwelle 32 drehmomentenschlüssig verbunden.

Fig. 2 zeigt eine Variante, bei der zwischen dem Bauteil 20 und der Zwischenwelle 32 noch ein Grundkörper aus Stahl vorhanden ist.

Das Drehmoment am Nebenabtrieb wird bei beiden Varianten eingeleitet von der Welle 2, welche sich innerhalb des Gehäuses des Getriebes befindet. Am Flansch 26 des erfindungsgemäßen Bauteils 20 werden die nicht dargestellten anzutreibenden Bauteile angeschraubt.

Auf der Kerbverzahnung 11 der Zwischenwelle 32 ist die Schiebemuffe 12 axial beweglich angeordnet. Die Kerbverzahnung 13 der Schiebemuffe 12 kann mit der Kerbverzahnung 10 der Welle 2 durch ein nicht dargestelltes Betätigungselement in Eingriff gebracht werden. Diese Einrichtung ermöglicht, den Nebenabtrieb zu- oder abzuschalten. Im dargestellten abgeschalteten Zustand kann sich die Zwischenwelle 32 relativ zu Welle 2 drehen. Der Zapfen 8 ist im Zylinderrollenlager 6 gelagert. Eine zweite Lagerstelle der Zwischenwelle 32 ist das Kugellager 14, welches mittels der Schrauben 18 in dem Zwischengehäuse 16 fixiert ist. Der Wellendichtring 17 dichtet das Getriebegehäuse nach außen ab.

Das erfindungsgemäße Bauteil 20 in der in Fig. 1 dargestellten Variante weist im Bereich, der in Fig. 1 links der Kerbnut 24 dargestellt ist, eine Kerbverzahnung 21 auf, über die es drehmomentenschlüssig mit der Zwischenwelle 32, welche in diesem Bereich ebenfalls eine Kerbverzahnung aufweist, verbunden ist. Axial wird das Bauteil 20 auf der Zwischenwelle 32 von dem Deckel 28 gehalten, welcher mit der Schraube 30 in der Zwischenwelle 32 befestigt ist.

Der Sollbruchquerschnitt befindet sich im Kerbgrund der Kerbnut 24. Nach einem Bruch ist der Flansch 26 gegenüber dem Rest des Bauteils 20 drehbar. Der Absatz 31 im Deckel 28 dient als Verliersicherung und verhindert das Abfallen des Flansches mit den nicht dargestellten verbundenen Antriebsteilen. An der Nut 22 kann im Fall des Bruchs ein Werkzeug zur Demontage angesetzt werden.

Bei der Variante nach Fig. 2 ist das Bauteil 20 mit einem Grundkörper 33 an der Lötstelle 38 verbunden. Der Grundkörper besteht aus einem Material höherer Grundfestigkeit, insbesondere Stahl, wodurch erreicht wird, daß an der Kerbverzahnung 21 höhere Drehmomente übertragen werden können. Sowohl im Grundkörper 33 als auch im Bauteil 20 befindet sich eine Nut 36, in der ein Drahtring oder ein Sprengring eingelegt ist, welcher im Bruchfall als Verliersicherung dient, indem er eine axiale Bewegung des Grundkörpers 33 gegenüber dem flanschseitigen abgebrochenen Teil des Bauteils 20 verhindert.

### Bezugszeichen

- 2: Welle
- 6: Zylinderrollenlager
- 8: Zapfen
- 10: Kerbverzahnung
- 11: Kerbverzahnung
- 12: Schiebemuffe
- 13: Kerbverzahnung
- 14: Kugellager
- 16: Zwischengehäuse
- 17: Wellendichtring
- 18: Schraube
- 20: Bauteil mit der Sollbruchstelle
- 21: Kerbverzahnung
- 22: Nut
- 24: Kerbnut mit der Funktion Sollbruchstelle
- 26: Flansch
- 28: Deckel mit der Funktion Verliersicherung
- 30: Schraube
- 31: Absatz
- 32: Zwischenwelle
- 33: Grundkörper
- 34: Drahtring
- 36: Nut
- 38: Lötstelle

## Patentansprüche

1. Drehmoment übertragendes Bauteil (20) mit einer Sollbruchstelle, welches den Drehmomentenschluß löst, wenn die Belastung vorbestimmte Grenzen überschreitet, dadurch **gekennzeichnet,** daß das Bauteil aus Grauguß oder einer Bronzelegierung hergestellt ist, womit eine ausreichende Widerstandsfähigkeit gegenüber Schwingbelastung erzielt wird.

2. Bauteil (20) nach Anspruch 1, dadurch **gekennzeichnet,** daß eine Verkleinerung des tragenden Querschnitts mit der Funktion der Sollbruchstelle und die Materialeigenschaft der Widerstandsfähigkeit gegenüber Schwingbelastung derart aufeinander abgestimmt sind, daß der Drehmomentenschluß sowohl bei quasistatischer Überlastung als auch bei Überlastung durch Schwingbelastung gelöst wird.

3. Bauteil (20) nach Anspruch 1 oder 2, dadurch **gekennzeichnet,** daß der tragende Querschnitt durch eine umlaufende Kerbnut (24) verkleinert wird.

4. Bauteil (20) nach einem der Ansprüche 1 bis 3, dadurch **gekennzeichnet,** daß der Bruchverlauf im Überlastfall durch eine Kerbnut (24) eindeutig begrenzt ist.

5. Bauteil (20) nach einem der Ansprüche 1 bis 4, dadurch **gekennzeichnet,** daß es so angeordnet ist, daß beim Bruch keine Bruchstücke in das Gehäuse der Antriebseinrichtung gelangen können, und daß es ohne Öffnen des Gehäuses der Antriebseinrichtung austauschbar ist.

6. Bauteil (20) nach einem der Ansprüche 1 bis 5, dadurch **gekennzeichnet,** daß es mit einem antreibenden Bauteil höherer Grundfestigkeit durch Verlöten oder Verschweißen verbunden ist, wobei bei dieser Variante beim Bruch das Bauteil zusammen mit dem antreibenden Bauteil austauschbar ist.

7. Bauteil (20) nach einem der Ansprüche 1 bis 6, dadurch **gekennzeichnet,** daß eine Verliersicherung (28, 30, 31) bzw. (34, 36) vorgesehen ist, welche beim Bruch das Abfallen von angebundenen Antriebsteilen verhindert.

8. Bauteil (20) nach einem der Ansprüche 1 bis 7, dadurch **gekennzeichnet,** daß eine Nut (22) vorgesehen ist, an welcher im Falle eines Bruchs ein Demontagewerkzeug angesetzt werden kann.

9. Bauteil (20) nach einem der Ansprüche 1 bis 8, dadurch **gekennzeichnet,** daß es an Nebenabtrieben von Fahrzeuggetrieben verwendet wird.
